# EUROPÄISCHE PATENTSCHRIFT

(11) **EP 2 297 561 B1**
(45) Veröffentlichungstag und Bekanntmachung des Hinweises auf die Patenterteilung: **12.09.2018**
(21) Anmeldenummer: 09772514.7
(22) Anmeldetag: 02.07.2009
(51) Int. Cl.: B60T 8/36, G01L 19/00, G01L 19/14, H01R 13/24

(54) **VORMONTAGEBAUGRUPPE FÜR EINE KONTAKTANORDNUNG EINER SENSORBAUGRUPPE**
PRE-INSTALLATION ASSEMBLY FOR A CONTACT ARRANGEMENT OF A SENSOR ASSEMBLY
MODULE DE PRÉMONTAGE POUR UN ENSEMBLE DE CONTACT D UN MODULE CAPTEUR

(30) Priorität: 04.07.2008 DE 102008040180
(43) Veröffentlichungstag der Anmeldung: 23.03.2011
(73) Patentinhaber: Robert Bosch GmbH, 70442 Stuttgart (DE)
(72) Erfinder: KAISER, Harry, 71706 Markgroeningen (DE)
(86) Internationale Anmeldenummer: PCT/EP2009/058349
(87) Internationale Veröffentlichungsnummer: WO 2010/000814

(56) Entgegenhaltungen:
- EP-A- 1 317 021
- EP-A1- 1 113 275
- DE-A1- 10 244 760
- DE-A1- 19 917 941
- JP-A- H07 161 416
- US-A- 4 029 375
- US-A1- 2004 147 140

## Beschreibung

### Stand der Technik

Die Erfindung betrifft eine Vormontagebaugruppe für eine Kontaktanordnung einer Sensorbaugruppe nach der Gattung des unabhängigen Patentanspruchs 1.

In der Offenlegungsschrift DE 19917941 A1 wird ein Bremsgerät für ein Fahrzeugbremssystem mit einer Kontaktanordnung für eine Sensorbaugruppe offenbart. Bei dem beschriebenen Bremsgerät wird die Steuerelektronik zur Vereinfachung der Montage in einem über den mindestens einen Drucksensor gestülpten Gehäuse untergebracht und die elektrische Verbindung zwischen dem Drucksensor und der Steuerelektronik wird bei der Montage über vier Federkontaktstifte selbsttätig hergestellt. Das Gehäuse wird dabei auf einem Hydraulikblock des Bremsgerätes befestigt, in das der mindestens eine Drucksensor eingesetzt ist, so dass sich die Federkontaktstifte endseitig mit einem definierten Anlagedruck zwischen den einander gegenüberliegenden Kontaktflächen des Drucksensors und der Steuerelektronik abstützen. Hierbei sind die Federkontaktstifte in Führungen eingesteckt, die sich in einem Isolierstück befinden, wobei die Federkontaktstifte jeweils eine Kontakthülse mit einliegender Kontaktfeder und mindestens einen in der Kontakthülse axial verschiebbaren Kontaktstößel aufweisen, der von der als Druckfeder ausgebildeten Kontaktfeder in Ausschiebrichtung aus der Führungshülse beaufschlagt ist. Zwischen Kontakthülse und Kontaktstößel ist eine axiale Abstützung vorgesehen, durch welche der Kontaktstößel in seiner Kontakthülse gehalten ist. Diese Abstützung besteht aus einer umgebördelten Randzone am Ende der Kontakthülse, an der eine kolbenartige Verdickung des stufig abgesetzten Kontaktstößels aufläuft. Bei einigen Ausführungsformen der bekannten Federkontaktstifte werden beide Endbereiche von einem Kontaktstößel gebildet, wobei die Kontaktstößel aus entgegengesetzten Richtungen in ihre den Mittelbereich des Federkontaktstiftes bildende Kontakthülse eingreifen. Zwischen den verdickten Enden der beiden Kontaktstößel ist die in der Kontakthülse geführte Schraubendruckfeder abgestützt und drückt die Kontaktstößel bei nicht eingebautem Federkontaktstift in ihre maximal aus der Kontakthülse ausgeschobene Endlage. Somit bildet der Federkontaktstift aus Kontakthülse, Kontaktstößeln und Kontaktfeder bereits im nicht eingebauten Zustand eine stabil vormontierte und somit leicht handhabbare Baugruppe. Die Komponenten des Federkontaktstiftes müssen jedoch sehr maßhaltig gefertigt sein, um eine dauerhaft problemlose Kontaktierung sicherstellen zu können. Dies gilt in besonderem Maße, wenn die Baugruppe insgesamt filigran gestaltet ist. Dadurch ist die Herstellung der Vormontagebaugruppe aus Kontakthülse, Kontaktfeder und Kontaktstößeln insgesamt technisch aufwändig und bereits der einzelne Federkontaktstift aus Präzisionsbauteilen ist relativ teuer.
Aus der DE 10244760 A1 ist ferner eine Kontaktanordnung bei einer Drucksensorbaugruppe zur Drucküberwachung in einer Fahrzeugbremsanlage bekannt. Bei dieser Anordnung sind Federkontakte vorgesehen, die ausschließlich aus der Federwicklung einer gewickelten Schraubendruckfeder bestehen und sich daher durch eine technisch einfache Bauweise auszeichnen. Diese als Federkontaktstifte genutzten Schraubendruckfedern weisen jeweils zwei Wicklungsabschnitte mit unterschiedlichem Durchmesser auf, wobei der Führungen in Tragbauteilen durchdringende längere Wicklungsabschnitt einen deutlich geringeren Wicklungsdurchmesser aufweist als ein aus den Führungen herausstehender Wicklungsabschnitt. Zur Verbesserung der Führungseigenschaften ist die Federwicklung im längeren Wicklungsabschnitt zudem auf Block gewickelt, wodurch die axiale Federbelastung vom aus der Führung herausstehenden Wicklungsabschnitt allein aufgebracht werden muss, der hierzu bei der Montage entsprechend zusammengedrückt werden muss. Der Zusammenbau setzt somit voraus, dass außerhalb der Führung ausreichend Platz für die Zuführung des mit der zweiten Kontaktfläche versehenen Bauteils vorhanden ist, damit der aus der Führung herausstehende Wicklungsabschnitt unter Kontaktierung entsprechend weit zusammengedrückt werden kann. Der für die Kompression des Wicklungsabschnitts notwendige Bauraum wird konstruktiv nicht bei allen Kontaktanordnungen für Sensorbaugruppen zur Verfügung stehen. Auch muss die Kontaktfläche für das Wicklungsende des kürzeren Wicklungsabschnittes relativ groß sein, was ebenfalls nicht bei jedem Anwendungsfall erwünscht sein wird, weil es sich nachteilig auf die Bauraumverhältnisse auswirken kann.
Aus der US 4,029,375 A ist eine flache elektrische Kontaktanordnung bekannt, bei welcher die Federkontakte gegen Herausfallen aus ihrer Führung gesichert sind. Zu diesem Zweck sind eine abgestufte Führung und ein abgestufter Federkontakt vorgesehen, wobei sich ein breiteres Ende des Federkontaktes auf einer durch die Abstufung der Führung entstehenden Schulter abstützt.
Aus der US 2004/147140 A1 sind verschiedene Ausführungsformen von Federkontakten bekannt.
Aus der EP 1 317 021 A1 ist ein Anschlussstück für eine einen Fluidkanal enthaltene Fluidleitung bekannt, deren Wandung mindestens einen Signalleiter zur Übertragung elektrischer und/oder optischer Signale aufweist.
Aus der JP H07 161416 A ist eine Kontaktiervorrichtung für Platinen bekannt, welche zwischen zwei unterschiedlichen Platinen angeordnet wird. Hierbei liegen aus Kunstharz bestehende flache Platten als isolierende Elemente übereinander und sind an ihren Ecken über Schrauben miteinander verschraubt, so dass die flachen Platten einen einstückigen Grundkörper für die Kontaktiervorrichtung ausbilden. Der Grundkörper weist eine Mehrzahl von Durchgangsbohrungen mit einer vorgegebenen Anordnung auf. Die Durchgangsbohrungen sind als spindelförmigen Hohlteile ausgebildet, bei welchen der Durchmesser des Mittelteils etwas größer als der Durchmesser der oberen und unteren Öffnung ist. In den Durchgangsbohrungen sind spindelförmige Schraubenfedern angeordnet, welche aus einem Leiter bestehen und an beiden Enden einen auf Block gewickelten Endbereich aufweisen. Die Schraubenfedern sind derart in den Durchgangsbohrungen angeordnet, dass nur der jeweilige Endbereich von der Durchgangsbohrung nach oben und unten hin freigelegt ist. Dadurch können die Schaltungen der beiden Platinen elektrisch miteinander verbunden werden.
Aus der EP 1 113 275 A1 ist eine Kontaktiervorrichtung zum Testen von Halbleiterbaugruppen bekannt. Die Kontaktiervorrichtung umfasst einen aus einem elektrisch isolierenden Material bestehenden Grundkörper, welcher eine Mehrzahl von Durchgangsbohrungen aufweist. Bei den Durchgangsbohrungen ist der Durchmesser des Mittelteils ein bisschen größer als der Durchmesser der oberen und unteren Öffnung ausgeführt. In den Durchgangsbohrungen sind spindelförmige Schraubenfedern angeordnet, welche aus einem Leiter bestehen und an beiden Enden einen auf Block gewickelten Endbereich aufweisen. Die Schraubenfedern sind derart in den Durchgangsbohrungen angeordnet, dass nur der jeweilige Endbereich von der Durchgangsbohrung nach oben und unten hin freigelegt ist.

### Offenbarung der Erfindung

Die erfindungsgemäße Vormontagebaugruppe für eine Kontaktanordnung einer Sensorbaugruppe mit den Merkmalen des unabhängigen Patentanspruchs 1 hat demgegenüber den Vorteil, dass sich ein Tragbauteil und ein Klemmbauteil über Verbindungsmittel einfach miteinander verbinden lassen, so dass wenigstens ein Federkontaktstift über von ihm durchdrungene fluchtende Führungen im Tragbauteil und Klemmbauteil einfach positioniert und gehalten wird. Zur Bildung der erfindungsgemäßen Vormontagebaugruppe wird der mindestens eine Federkontaktstift in der Führung des Tragbauteils gehalten, wobei ein erster endseitiger Abschnitt des wenigstens einen Federkontaktstifts in der zugeordneten Führung des Tragbauteils axial abgestützt ist. Ein zweiter endseitiger Abschnitt des wenigstens einen Federkontaktstifts ist in der zugeordneten Führung des Klemmbauteils axial abgestützt, wobei das Klemmbauteil und das Tragbauteil in der fluchtenden Stellung der korrespondierenden Führungen über die Verbindungsmittel mit einander verbunden werden. Nach dem Verbinden des Klemmbauteils mit dem Tragbauteil ist der wenigstens eine Federkontaktstift automatisch auf die gewünschte Länge zusammengedrückt und wird unverlierbar in den fluchtenden Führungen des Klemmbauteils und des Tragbauteils in dieser Position gehalten. Dadurch entsteht in vorteilhafter Weise eine einfach zu handhabende Vormontagebaugruppe für eine Kontaktanordnung einer Sensorbaugruppe Hierbei werden die fluchtenden Führungen des Tragbauteils und des Klemmbauteils über Positioniermittel des korrespondierenden Tragbauteils bzw. Klemmbauteils problemlos in ihre Konstruktionslage gebracht, um miteinander verbunden zu werden. Als Verbindungsmittel zwischen dem Klemmbauteil und dem Tragbauteil ist mindestens ein Einpresszapfen vorgesehen, welcher im Einbauzustand in eine zugeordnete Einpressbohrung eingepresst ist. Hierbei können der Einpresszapfen und die zugeordnete Einpressbohrung konstruktiv so aufeinander abgestimmt werden, beispielsweise durch eine entsprechende Formvorgabe, dass im Einbauzustand eine positionsrichtige Verbindung zwischen dem Klemmbauteil und dem Tragbauteil erreichbar ist. Zudem sind als Positioniermittel zwischen dem Klemmbauteil und dem Tragbauteil mehrere Einpresszapfen und/oder Positionierungszapfen vorgesehen, die im Einbauzustand in zugeordneten Einpressbohrungen mit passendem Lochbild eingepresst sind. Um den Einpressvorgang in Anbetracht der relativ kleinen Abmessungen der einzelnen Komponenten zu erleichtern, kann als Verbindungsmittel zwischen dem Klemmbauteil und dem Tragbauteil in vorteilhafter Weise ein zentraler Einpresszapfen vorgesehen werden, welcher im Einbauzustand in eine zugeordnete Einpressbohrung eingepresst ist, wobei als Positionierungsmittel mehrere Positionierungszapfen vorgesehen werden können, welche während des Einpressvorgangs in zugeordnete Positionierungsbohrungen mit passendem Lochbild eingeführt werden. Die im Vergleich mit dem Einpresszapfen kleineren Positionierungszapfen dienen daher zur Lagepositionierung und dadurch auch als Verdrehschutz.
Durch die in den abhängigen Ansprüchen aufgeführten Maßnahmen und Weiterbildungen sind vorteilhafte Verbesserungen der im unabhängigen Patentanspruch 1 angegebenen Vormontagebaugruppe für eine Kontaktanordnung einer Sensorbaugruppe möglich.
Um günstige Einbauverhältnisse für mehrere Federkontaktstifte zu erzielen, können diese mit etwa gleichem Abstand voneinander entlang einer Kreisbahn angeordnet werden. Hierbei kann das die Federkontaktstifte aufnehmende Klemmbauteil bei geringem Material und Bauraumbedarf als Haubenkörper mit einem zentralen topfförmigen Einpresszapfen und einem angeformten radial auskragenden Ringbund ausgebildet sein, wobei die Führungen für den zugeordneten Endbereich des Federkontaktstiftes als trichterförmiger Hülsenkörper in den Ringbund integriert sind von einer ersten Stirnseite abstehen, und das als Haubenkörper ausgeführte Klemmbauteil im Einbauzustand über den zentralen Einpresszapfen und mehrere von einer zweiten Stirnseite des Ringbunds abstehende Positionierungszapfen mit dem korrespondierenden Tragbauteil verbunden ist. Hierbei erstrecken sich der zentrale Einpresszapfen und der mindestens eine Positionierungszapfen in die gleiche Richtung.
In Ausgestaltung der erfindungsgemäßen Vormontagebaugruppe ist der Federkontaktstift als Schraubendruckfeder ausgeführt und besteht zumindest überwiegend aus einer sich über seine gesamte konstruktive Länge erstreckenden Federwicklung, deren in den Endbereichen liegenden Wicklungsabschnitte durch Hemmung der Axialbeweglichkeit ihrer Federwindungen versteift sind. Dadurch ist in vorteilhafter Weise beim zumindest überwiegend als Wickelkörper ausgebildeten Federkontaktstift keine Gleitführung oder dgl. erforderlich, die des maßhaltigen Zusammenwirkens mehrerer Kontaktelemente bedarf. Vielmehr dient der mittlere Wicklungsabschnitt als kompressible Schraubendruckfeder, während die Wicklungsabschnitte in den druckversteiften Endbereichen zwar Federwindungen umfassen, die jedoch durch die axiale Einfederung hemmende Mittel inkompressibel und somit drucksteif gemacht sind. Solche axial hemmenden Mittel könnten z. B. hülsenförmige Umspritzungen aus Kunststoff sein, mit denen die Federwindungen in den Endbereichen jeweils bis nahe ihrem mit der Kontaktfläche zusammenwirkenden Ende ummantelt bzw. miteinander verbunden werden. Durch die bauliche Vereinfachung lässt sich bereits der einzelne Federkontaktstift sehr kostengünstig fertigen.

Besonders vorteilhaft kann die Federwicklung des Federkontaktstiftes in beiden die Endbereiche bildenden Wicklungsabschnitten verjüngt sein. Die entsprechend verjüngten Enden des Federkontaktstiftes können hierbei mit entsprechend kleineren Kontaktgegenflächen zusammenwirken. Zudem kann das Drahtende der verjüngten Federwicklung selbst eine Art zentrale Kontaktspitze bilden, die mit entsprechend hoher Flächenpressung an der Kontaktgegenfläche aufliegen kann. Hinzu kommt noch, dass die auf die Federwicklung wirkenden Reaktionskräfte der Kontaktspitze nahezu zentrisch eingeleitet werden, da sie nahe der Mittellängsachse der Federwicklung liegen. Hierdurch wird der als Schraubendruckfeder genutzte mittlere Wicklungsabschnitt in geringerem Maße auf Biegung beansprucht und bedarf daher in diesem Mittelbereich nicht zwingend einer radialen Abstützung bzw. Führung, wenn die Endbereiche der Federwicklung bildenden Wicklungsabschnitte ihrerseits in passende Führungen eingreifen.

Um auf einfache Weise eine axiale Abstützung und gleichzeitig eine Zentrierung der die Endbereiche bildenden Wicklungsabschnitte in der von ihnen durchdrungenen Führung herbeizuführen, kann der Übergangsbereich des Federkontaktstiftes von seinem mittleren Wicklungsabschnitt zum den verjüngten Endbereich bildenden Wicklungsabschnitt an den Endbereichen unter Anpassung an einen konischen Sitz in der zugeordneten Führung des Tragbauteils bzw. Klemmbauteils kegelförmig gewickelt sein. Durch eine spiegelsymmetrische Gestaltung des Federkontaktstiftes bezogen auf seine Mittelquerachse lässt sich dabei sicherstellen, dass der Federkontaktstift in beiden Endbereichen mit dem konischen Sitz zusammenwirken kann, wodurch die Montage des Federkontaktstiftes einfacher und dabei verwechslungssicher vorgenommen werden kann.

Eine besonders einfache Bauweise des Federkontaktstiftes lässt sich realisieren, wenn die Federwindungen in den Endbereichen des erfindungsgemäßen Federkontaktstiftes zur axialen Versteifung dieser Endbereiche auf Block gewickelt sind. Hierdurch kann der Federkontaktstift ein einteilig aus Federdraht gewickelter Wickelkörper sein und somit in einem ggf. automatisierten Arbeitszyklus kostengünstig als Massenteil hergestellt werden. Zudem kann die radiale Abstützung der kegelförmigen Übergangsbereiche in den konischen Führungsmitteln dadurch verbessert werden, dass die Federwindungen in den kegelförmigen Übergangsbereichen des Federkontaktstiftes zumindest überwiegend oder vollständig ebenfalls auf Block gewickelt sind. Der Kostenvorteil wirkt sich bei einer Kontaktierung für eine Sensorbaugruppe oder dergleichen besonders vorteilhaft aus, wenn diese mehrere Federkontaktstifte umfasst, die alle baugleich gestaltet sind.

Eine vorteilhafte Ausführungsform der Erfindung ist nachfolgend anhand von Zeichnungen nähern erläutert. In den Zeichnungen bezeichnen gleiche Bezugszeichen zugeordnete Komponenten bzw. Elemente, die gleiche bzw. analoge Funktionen ausführen.

### Kurze Beschreibung der Zeichnungen

Fig. 1 zeigt eine Kontaktanordnung an einer aufgeschnittenen Baugruppe eines Drucksensors für ein Fluidaggregat in perspektivischer Schrägansicht.
Fig. 2 eine perspektivische Schrägansicht auf eine Gehäusekapsel der Baugruppe bei der Vormontage der Federkontaktstifte unter Verwendung eines Klemmbauteils.
Fig. 3 die Schrägansicht nach Fig. 2 nach Abschluss der Vormontage der Federkontaktstifte.
Fig. 4 das separate Klemmbauteil von seiner Unterseite in perspektivischer Schrägansicht.
Fig. 5 das Klemmbauteil gemäß Fig. 4 in einer perspektivischen Draufsicht.
Fig. 6 das separate Klemmbauteil von seiner Oberseite in perspektivischer Schrägansicht.

### Ausführungsform der Erfindung

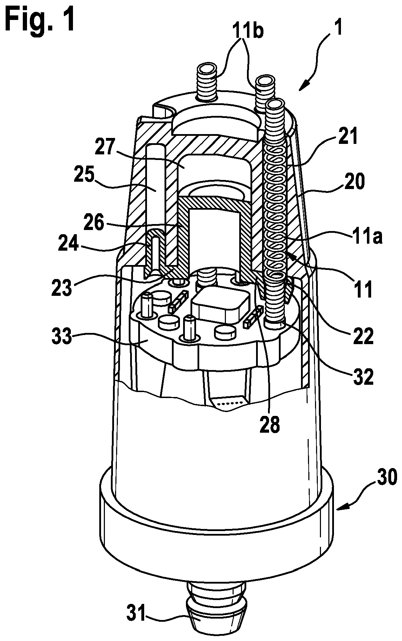

Eine aus Fig. 1 ersichtliche Kontaktanordnung 1 umfasst insgesamt vier Federkontaktstifte 11, die in einer kegelstumpfförmigen Gehäusekapsel 20 aus isolierendem Kunststoff angeordnet sind und zur elektrischen Kontaktierung eines nicht gezeigten Anbausteuergerätes für ein Bremsgerät eines Fahrzeugbremssystems mit einem Drucksensor einer Sensoreinheit 30 zur Bremsdruckmessung dienen. Da die Gehäusekapsel 20 und die Sensoreinheit 30 auf einer Umfangsseite aufgebrochen dargestellt sind, kann man von den insgesamt vier Federkontaktstiften 11 in Fig. 1 nur drei sehen. Von der Unterseite der Sensoreinheit 30 steht zentral ein Rohrstutzen 31 ab, der im Einbauzustand unter Abdichtung in eine zugeordnete Bohrung eines nicht gezeigten Hydraulikblockes eingreift und dadurch eine fluidische Verbindung des Drucksensors zum Hydrauliksystem der zugehörigen Bremsanlage herstellt. Bei zusammengebautem Bremsgerät liegt die Kontaktanordnung 1 somit derart zwischen Sensoreinheit 30 und einem topfartig darüber gestülpten Steuergehäuse, dass die Federkontaktstifte 11 unter axialer Federbelastung mit ihrem unteren Ende auf der zugeordneten Kontaktfläche des Drucksensors und mit ihrem oberen Ende auf der zugeordneten Kontaktfläche an der Unterseite des Steuergehäuses aufliegen und unter allen Betriebsbedingungen eine zuverlässige Signalübertragung sicherstellen können, da sich die Federkontaktstifte 11 endseitig mit einem definierten Anlagedruck zwischen den einander gegenüberliegenden Kontaktflächen der Sensoreinheit 30 einerseits und der Steuerelektronik andererseits abstützen. Diese Kontaktierung entspricht abgesehen von der dargestellten Kontaktanordnung 1 der in der DE 19917941 A1 beschriebenen Bauweise, so dass an dieser Stelle auf weitergehende Erläuterungen zur Gesamtanordnung verzichtet wird.

Die einzelnen Federkontaktstifte 11 sind jeweils einteilig als Wickelfeder aus gut leitendem Federdraht gebogen, wobei der Federdraht über die gesamte Länge der Federwicklung einen konstanten Rundquerschnitt aufweist. Die Federwicklung jedes der baugleichen Federkontaktstifte 11 ist ferner prinzipiell als Schraubendruckfeder ausgelegt und in drei Längenabschnitte gegliedert, wobei lediglich ein mittlerer Wicklungsabschnitt 11a als axial zusammendrückbare Schraubendruckfeder ausgebildet ist, weil die Windungen in diesem Längenabschnitt in entsprechendem Abstand zueinander verlaufend gewickelt sind. Dieser mittlere Wicklungsabschnitt weist auch den größten und dabei konstanten Wicklungsdurchmesser auf. An den mittleren Wicklungsabschnitt 11a anschließend ist die Federwicklung jeweils auf Block gewickelt, wodurch sich zwischen den einzelnen Federwindungen kein axialer Abstand mehr befindet. Außerdem verjüngt sich die Federwicklung vom mittleren Wicklungsabschnitt 11a ausgehend unter Zwischenschaltung eines kegelförmigen Übergangsbereichs zu Endbereiche des Federkontaktstiftes 11 bildenden Wicklungsabschnitten 11b. Die Endbereiche bildenden Wicklungsabschnitte 11b bestehen dabei jeweils aus einem zylindrischen Wickelkörper, der aufgrund seiner aufeinanderliegenden Windungen axial drucksteif und somit unnachgiebig ausgebildet ist.

Aufgrund dieser unnachgiebigen Gestaltung der Wicklungsabschnitte 11b sowie der kegelförmig auf Block gewickelten Übergangsbereiche lassen sich die Federkontaktstifte 11 lediglich im den Mittelbereich bildenden Wicklungsabschnitt 11a axial zusammendrücken.

Im Vormontagezustand mit entsprechend verkürzter Federwicklung sind die Federkontaktstifte 11 axial jeweils zwischen einer konischen Ringstirnfläche der sie überwiegend aufnehmenden Führung 21 und einem zugeordneten Kontakt 32 abgestützt, der sich auf der Oberseite einer den oberen Abschluss der Sensoreinheit 30 bildenden Kontaktplatte 33 befindet. Diese aus der Umfangswand der Gehäusekapsel 20 ausgesparte Führung 21 weist in einem unteren Längenabschnitt einen lichten Innendurchmesser auf, der geringfügig größer ist als der Wicklungsdurchmesser des Wicklungsabschnittes 11a und geht im oberen Längenabschnitt unter Ausbildung der konischen Ringstirnfläche in eine Durchgangsbohrung mit geringerem Durchmesser über, wobei der Bohrungsdurchmesser geringfügig größer ist als der Durchmesser des Wicklungsabschnittes 11b. Die Durchgangsbohrung endet an der Oberseite der Gehäusekapsel 20, wobei der Wicklungsabschnitt 11b mit einer Teillänge aus der Oberseite der Gehäusekapsel 20 heraussteht. Zwischen der Kontaktplatte 33 und der Führung 21 durchsetzt der Wicklungsabschnitt 11b der Federkontaktstifte 11 jeweils eine zugeordnete Führung 22, die aus einem Ringbund 28 eines als Haubenkörpers ausgeführten Klemmbauteils 23 ausgespart ist. Dieses ebenfalls aus isolierendem Kunststoff hergestellte Klemmbauteil 23 ist über einen zentralen topfförmigen Einpresszapfen 26 und mehrere von einer oberen Stirnseite des Ringbunds 28 abstehende Positionierungszapfen 24 zylindrischer Grundform mit der Gehäusekapsel 20 verbunden. Vorzugsweise sind der Einpresszapfen 26 und die Positionierungszapfen 24 an den Ringbund 28 angespritzt und somit einteilig mit diesem ausgebildet.

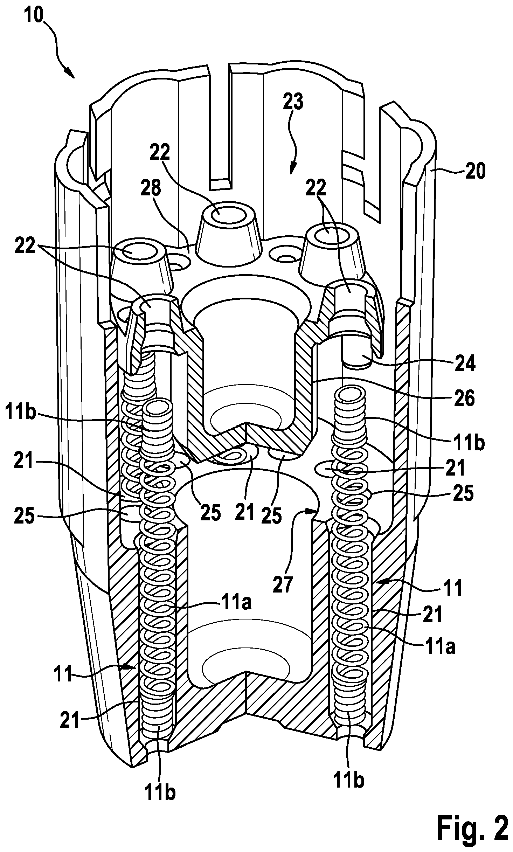

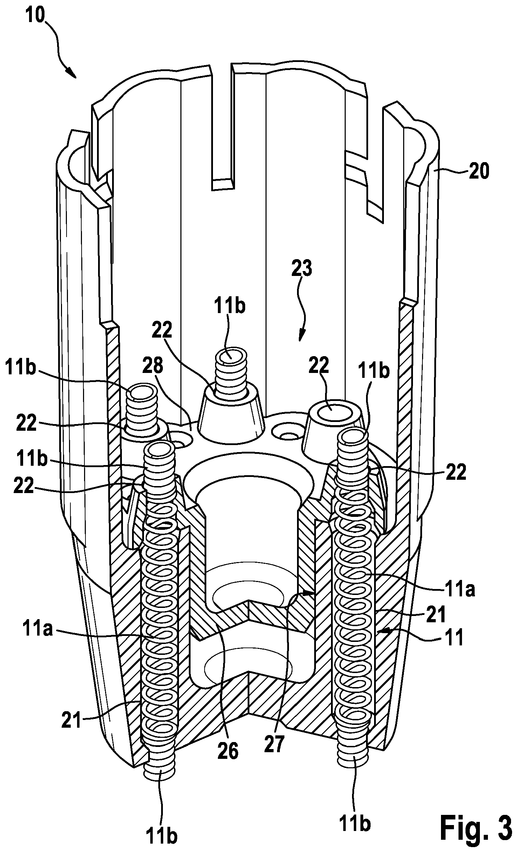

Wie in Verbindung mit den Fig. 2 und 3 deutlich zu erkennen ist, lassen sich die Federkontaktstifte 11 auf einfache Weise mit der Gehäusekapsel 20 und dem als Haubenkörper ausgeführten Klemmbauteil 23 zu einer Vormontagebaugruppe 10 zusammenfügen. Die aufgebrochene Gehäusekapsel 20 ist hierbei zur besseren Erkennbarkeit in einer Vormontagestellung gegenüber Fig. 1 um 180 Grad gedreht gezeichnet. In dieser gedrehten Stellung liegt das den großen Durchmesser aufweisende Ende der Führungen 21 oben. Somit können die Federkontaktstifte 11 problemlos von oben in die zugeordneten Führungen 21 eingeschoben werden, wonach ihr unterer Wicklungsabschnitt 11b mit einer Teillänge aus der unten liegenden Oberseite der Gehäusekapsel 20 heraussteht. Dabei liegt der kegelförmig auf Block gewickelte Übergangsbereich der Federkontaktstifte 11 an der konischen Ringstirnfläche der Führung 21 an und ist somit axial nach unten zuverlässig abgestützt. Dabei weist die Federwicklung gemäß Fig. 2 zunächst noch ihre expandierte Ursprungslänge auf, wodurch der Federkontaktstift 11 mit etwa einem Drittel der Länge des Wicklungsabschnitts 11a sowie dem daran anschließenden Wicklungsabschnitt 11b aus der zugehörigen Führung 21 heraussteht. Unter entsprechend fluchtender Zuordnung seiner Führungen 22 zu den Federkontaktstiften 11 wird nunmehr das als Haubenkörper ausgeführte Klemmbauteil 23 auf deren oberen Wicklungsabschnitt 11b aufgesetzt. Da sich die Führungen 22 nach oben trichterförmig auf einen Bohrungsdurchmesser verjüngen, der geringfügig größer als der Durchmesser des Wicklungsabschnitts 11b ist, durchdringen die Wicklungsabschnitte 11b ihre Führung 22 bis ihr kegelförmig gewickelter Übergangsbereich unter axialer Abstützung am Zentrierkonus der Führung 22 anliegt. Durch anschließendes Niederdrücken des Klemmbauteils 23 im Sinne einer Parallelverschiebung nach unten werden die Federkontaktstifte 11 gemeinsam zunehmend zusammengedrückt. Die Kompression findet dabei ausschließlich im Wicklungsabschnitt 11a statt, da die Wicklungsabschnitte 11b ein starres Verhalten aufweisen und sich folglich nicht zusammendrücken lassen. Nach entsprechendem Verlagerungsweg tauchen das Ende des Zentralen Einpresszapfens 26 in eine zugeordnete aus der Gehäusekapsel 20 ausgesparte Einpressbohrung 27 ein, und die Enden der von der unteren Stirnseite des Ringbunds 28 nach unten abstehenden Positionierungszapfen 24 tauchen in ihre zugeordneten, aus der Gehäusekapsel 20 ausgesparten Positionierungsbohrungen 25 ein. Das Einführen des Einpresszapfens 26 in seine Einpressbohrung 27 und das Einführen der Positionierungszapfen 24 in die Positionierungsbohrungen werden dabei erleichtert, da die freien Enden ihrer zylindrischen Grundkörper ähnlich einer umlaufenden Fase kegelig verjüngt sind.

Nachdem das als Haubenkörper ausgeführte Klemmbauteil 23 seine in Fig. 3 gezeigte Endlage durch Auflaufen an der Stirnseite der Gehäusekapsel 20 erreicht hat, sind die Federkontaktstifte 11 automatisch auf die gewünschte Länge zusammengedrückt und in dieser Position gehalten, da das Klemmbauteil 23 über den in seine Einpressbohrung 27 eingepressten Einpresszapfen 26 zuverlässig an der Gehäusekapsel 20 verankert ist. Somit ist aus Gehäusekapsel 20, Federkontaktstiften 11 und Klemmbauteil 23 eine problemlos zu handhabende erfindungsgemäße Vormontagebaugruppe 10 entstanden. Diese Vormontagebaugruppe 10 in der Gehäusekapsel lässt sich haubenartig auf die Sensoreinheit 30 aufsetzen, wobei eine Positionierung in der exakten Drehstellung über die Umfangskontur von Sensoreinheit 30 und Gehäusekapsel 20 erfolgt. Somit treffen die Enden der Wicklungsabschnitte 11b exakt am zugeordneten Kontakt 32 auf und stellen in der letzten Steckbewegungsphase der Gehäusekapsel 20 unter geringfügig weiterer Längenkompression der Federkontaktstifte 11 selbsttätig die elektrische Verbindung zur Sensoreinheit 30 her, wonach die in Fig. 1 gezeigte Kontaktanordnung 1 vorliegt.

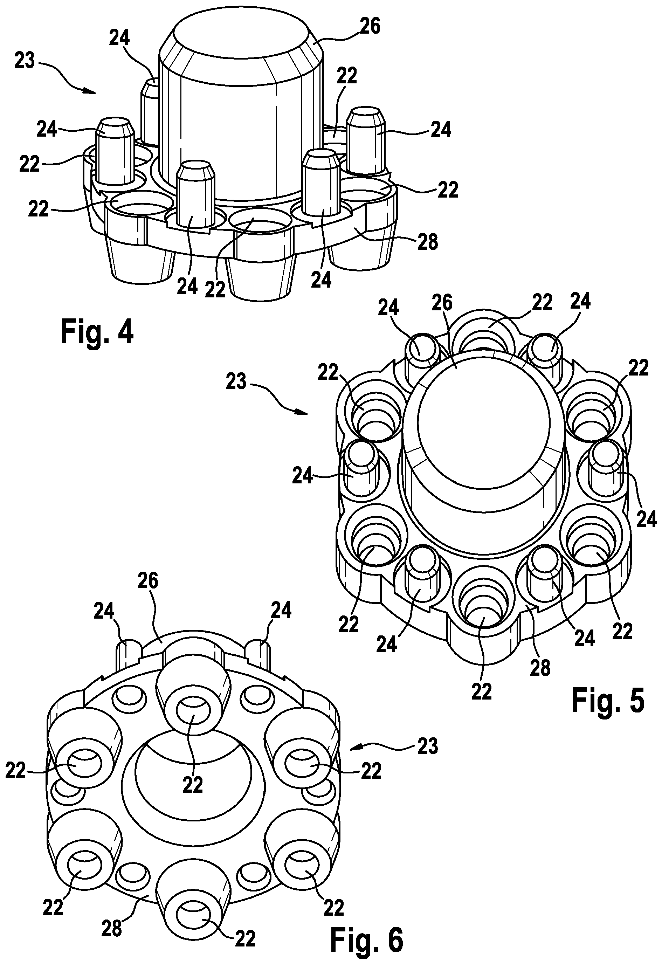

In den Fig. 4, 5 und 6 ist das als Haubenkörper ausgeführte Klemmbauteil 23 in separater Darstellung mit seinen Detailgestaltungen zu erkennen. Der Grundkörper des Klemmbauteils 23 ist dabei ein parallelflacher, annähernd kreisförmiger Ringbund 28, an welchen zentral ein Einpresszapfen 26 angeformt ist. Von einer Stirnseite des Ringbunds 28 stehen dabei rechtwinklig zur Ringbundebene die Positionierungszapfen 24 ab, während von der gegenüberliegenden Stirnseite trichterförmige Hülsenkörper abstehen, welche gemeinsam mit einer zugeordneten Bohrung im Ringbund die Führung 22 begrenzen. Die Positionierungszapfen 24 und der zentrale topförmige Einpresszapfen 26 erstrecken sich in die gleiche Richtung. Positionierungszapfen 24 und Führungen 22 sind dabei über die Stirnseite des Ringbunds 28 des Klemmbauteils 23 gleichmäßig verteilt angeordnet, wobei zwischen zwei benachbarten Führungen 22 jeweils ein Positionierungszapfen 24 angeordnet ist. Hierdurch kann eine besonders günstige Dimensionierung des Klemmbauteils 23 erfolgen. Insgesamt verfügt das Klemmbauteil 23 über sechs Führungen 22 und sechs Positionierungszapfen 24, obwohl im vorliegenden Anwendungsfall nur vier Federkontaktstifte 11 vorgesehen sind. Hierdurch wird ermöglicht, dass die Gehäusekapsel 20 auch ohne bauliche Änderungen für andere Kontaktanordnungen mit bis zu sechs Federkontaktstiften 11 genutzt werden kann.

## Patentansprüche

1. Vormontagebaugruppe für eine Kontaktanordnung einer Sensorbaugruppe, mit einem Tragbauteil (20), einem Klemmbauteil (23) und wenigstens einem Federkontaktstift (11), wobei leitend miteinander verbundene Endbereiche des wenigstens einen Federkontaktstiftes (11) axial drucksteif ausgebildet und unter axialer Federbelastung zwischen im Abstand voneinander angeordneten Stützflächen gehalten sind, **dadurch gekennzeichnet, dass** das Tragbauteil (20) und das Klemmbauteil (23) über Verbindungsmittel miteinander verbunden sind, wobei der wenigstens eine Federkontaktstift (11) über von ihm durchdrungene fluchtende Führungen (21, 22) im Tragbauteil (20) und im Klemmbauteil (23) positioniert und gehalten ist, wobei ein erster endseitiger Abschnitt (11b) des wenigstens einen Federkontaktstifts (11) in der zugeordneten Führung (21) des Tragbauteils (20) axial abgestützt ist, und wobei ein zweiter endseitiger Abschnitt (11b) des wenigstens einen Federkontaktstifts (11) in der zugeordneten Führung (22) des Klemmbauteils (23) axial abgestützt ist, wobei das Tragbauteil (20) und das Klemmbauteil (23) über Positionierungsmittel in der fluchtenden Stellung der Führungen (21) des Tragbauteils (20) zu den Führungen (22) im Klemmbauteil (23) miteinander verbunden sind, wobei als Verbindungsmittel zwischen dem Klemmbauteil (23) und dem Tragbauteil (20) mindestens ein Einpresszapfen (24, 26) vorgesehen ist, welcher im Einbauzustand in eine zugeordnete Einpressbohrung (25, 27) eingepresst ist, und wobei als Positioniermittel zwischen dem Klemmbauteil (23) und dem Tragbauteil (20) mehrere Zapfen (24) vorgesehen sind, die im Einbauzustand in zugeordnete Bohrungen (25) mit passendem Lochbild eingepresst sind.

2. Vormontagebaugruppe nach Anspruch 1, **dadurch gekennzeichnet, dass** als Verbindungsmittel zwischen dem Klemmbauteil (23) und dem Tragbauteil (20) ein zentraler Einpresszapfen (26) vorgesehen ist, und dass als Positionierungsmittel mehrere Positionierungszapfen (24) vorgesehen sind, wobei im Einbauzustand der zentrale Einpresszapfen (26) in eine zugeordnet Einpressbohrung (27) eingepresst ist, und die Positionierungszapfen (24) in zugeordnete Positionierungsbohrungen (25) mit passendem Lochbild eingeführt sind.

3. Vormontagebaugruppe nach Anspruch 1 oder 2, **dadurch gekennzeichnet, dass** das Klemmbauteil (23) als Haubenkörper mit einem zentralen topfförmigen Einpresszapfen (26) und einem angeformten radial auskragenden Ringbund (28) ausgeführt ist, wobei von einer Stirnseite des Ringbund (28) mindestens ein Positionierungszapfen (24) rechtwinklig absteht, und auf der gegenüberliegenden Stirnseite des Ringbunds (28) mindestens eine als trichterförmiger Hülsenkörper ausgeführte Führung (22) absteht, wobei der zentrale Einpresszapfen (26) und der mindestens eine Positionierungszapfen (24) sich in die gleiche Richtung erstrecken.

4. Vormontagebaugruppe nach einem der Ansprüche 1 bis 3, **dadurch gekennzeichnet, dass** der Federkontaktstift (11) als Schraubendruckfeder ausgeführt ist und zumindest überwiegend aus einer sich über seine gesamte konstruktive Länge erstreckenden Federwicklung besteht, deren in den Endbereichen liegenden Wicklungsabschnitte (11b) durch Hemmung der Axialbeweglichkeit ihrer Federwindungen versteift sind.

5. Vormontagebaugruppe nach Anspruch 4, **dadurch gekennzeichnet, dass** beide Endbereiche des Federkontaktstiftes (11) jeweils von einem verjüngten Wicklungsabschnitt (11b) gebildet sind, wobei die entgegengesetzt angeordneten Wicklungsabschnitte (11b) bezogen auf die Mittelquerachse des Federkontaktstiftes (11) spiegelsymmetrisch gestaltet sind, wobei die Übergangsbereiche des Federkontaktstiftes (11) von seinem mittleren Wicklungsabschnitt (11a) zu den verjüngten Endbereichen bildenden Wicklungsabschnitte (11b) jeweils unter Anpassung an einen konischen Sitz in der zugeordneten Führung (21) des Tragbauteils (20) und/oder an einen konischen Sitz in der zugeordneten Führung (22) des Klemmbauteils (23) kegelförmig gewickelt sind.

6. Vormontagebaugruppe nach Anspruch 4 oder 5, **dadurch gekennzeichnet, dass** die Endbereiche bildenden Wicklungsabschnitte (11b) des Federkontaktstiftes (11) durch auf Block gewickelte Federwindungen versteift sind, wobei die Federwindungen in den kegelförmigen Übergangsbereichen des Federkontaktstiftes (11) ebenfalls auf Block gewickelt sind.

## Claims

1. Preassembled assembly for a contact arrangement of a sensor assembly, having a supporting component (20), a clamping component (23) and at least one spring contact pin (11), wherein conductively interconnected end regions of the at least one spring contact pin (11) are formed so as to be axially rigid under pressure and are held, in an axially spring-loaded manner, between support faces that are arranged in a manner spaced apart from one another, **characterized in that** the supporting component (20) and the clamping component (23) are connected together via connecting means, wherein the at least one spring contact pin (11) is positioned and held in the supporting component (20) and in the clamping component (23) via aligned guides (21, 22) through which said spring contact pin (11) passes, wherein a first end-side portion (11b) of the at least one spring contact pin (11) is axially supported in the associated guide (21) of the supporting component (20), and wherein a second end-side portion (11b) of the at least one spring contact pin (11) is axially supported in the associated guide (22) of the clamping component (23), wherein the supporting component (20) and the clamping component (23) are connected together via positioning means in the aligned position of the guides (21) of the supporting component (20) with respect to the guides (22) in the clamping component (23), wherein at least one push-fit peg (24, 26) is provided as connecting means between the clamping component (23) and the supporting component (20), said push-fit peg (24, 26), in the installed state, having been pushed into an associated push-fit hole (25, 27), and wherein a plurality of pegs (24) are provided as positioning means between the clamping component (23) and the supporting component (20), said pegs (24), in the installed state, having been pushed into associated holes (25) with a matching hole pattern.

2. Preassembled assembly according to Claim 1, **characterized in that** a central push-fit peg (26) is provided as connecting means between the clamping component (23) and the supporting component (20), and **in that** a plurality of positioning pegs (24) are provided as positioning means, wherein, in the installed state, the central push-fit peg (26) has been pushed into an associated push-fit hole (27), and the positioning pegs (24) have been introduced into associated positioning holes (25) with a matching hole pattern.

3. Preassembled assembly according to Claim 1 or 2, **characterized in that** the clamping component (23) is embodied as a hood body with a central cup-shaped push-fit peg (26) and an integrally formed radially projecting annular collar (28), wherein at least one positioning peg (24) protrudes at right angles from one end side of the annular collar (28), and on the opposite end side of the annular collar (28) at least one guide (22) embodied as a funnel-shaped sleeve body protrudes, wherein the central push-fit peg (26) and the at least one positioning peg (24) extend in the same direction.

4. Preassembled assembly according to one of Claims 1 to 3, **characterized in that** the spring contact pin (11) is embodied as a helical compression spring and consists at least predominantly of a spring winding extending along its entire structural length, the winding portions (11b) of said spring winding that are located in the end regions being stiffened by the axial movability of their spring coils being inhibited.

5. Preassembled assembly according to Claim 4, **characterized in that** the two end regions of the spring contact pin (11) are each formed by a narrowed winding portion (11b), wherein the winding portions (11b) arranged on opposite sides with respect to the central transverse axis of the spring contact pin (11) are designed in a mirror-symmetrical manner, wherein the transition regions of the spring contact pin (11) from its central winding portion (11a) to the winding portions (11b) forming narrowed end regions are each wound in a conical manner, being adapted to a conical seat in the associated guide (21) of the supporting component (20) and/or to a conical seat in the associated guide (22) of the clamping component (23).

6. Preassembled assembly according to Claim 4 or 5, **characterized in that** the winding portions (11b), forming end regions, of the spring contact pin (11) are stiffened by spring coils wound to form a solid block, wherein the spring coils are likewise wound to form a solid block in the conical transition regions of the spring contact pin (11).

## Revendications

1. Module de pré-assemblage pour un ensemble de contact d'un module capteur, comprenant un élément de support (20), un élément de serrage (23) et au moins une broche de contact à ressort (11), dans lequel les zones d'extrémité reliées l'une à l'autre de manière conductrice de ladite au moins une broche de contact à ressort (11) sont conçues de manière axialement résistante à la pression et sont retenues sous sollicitation axiale du ressort entre des surfaces d'appui disposées à distance l'une de l'autre, **caractérisé en ce que** l'élément de support (20) et l'élément de serrage (23) sont reliés l'un à l'autre par des moyens de liaison, dans lequel ladite au moins une broche de contact à ressort (11) est positionnée et retenue dans l'élément de support (20) et dans l'élément de serrage (23) par l'intermédiaire de guides (21, 22) alignés traversés par celle-ci, dans lequel une première partie d'extrémité (11b) de ladite au moins une broche de contact à ressort (11) est supportée axialement dans le guide (21) associé de l'élément de support (20), et dans lequel une seconde partie d'extrémité (11b) de ladite au moins une broche de contact à ressort (11) est supportée axialement dans le guide (22) associé de l'élément de serrage (23), dans lequel l'élément de support (20) et l'élément de serrage (23) sont reliés l'un à l'autre par l'intermédiaire de moyens de positionnement à la position alignée des guides (21) de l'élément de support (20) par rapport aux guides (22) dans l'élément de serrage (23), dans lequel il est prévu en tant que moyens de liaison entre l'élément de serrage (23) et l'élément de support (20) au moins un tenon d'emmanchement (24, 26), qui est emmanché à l'état monté dans un alésage d'emmanchement (25, 27) associé, et dans lequel il est prévu en tant que moyens de positionnement entre l'élément de serrage (23) et l'élément de support (20) plusieurs tenons (24) qui, à l'état monté, sont emmanchés dans des alésages (25) associés avec une configuration de trou adaptée.

2. Module de pré-assemblage selon la revendication 1, **caractérisé en ce qu'**il est prévu en tant que moyens de liaison entre l'élément de serrage (23) et l'élément de support (20) un tenon d'emmanchement central (26), et **en ce qu'**il est prévu en tant que moyens de positionnement une pluralité de tenons d'emmanchement (24), dans lequel, à l'état monté, le tenon d'emmanchement central (26) est emmanché dans un alésage d'emmanchement (27) associé et les tenons de positionnement (24) sont insérés dans des alésages de positionnement (25) associés avec une configuration de trou adaptée.

3. Module de pré-assemblage selon la revendication 1 ou 2, **caractérisé en ce que** l'élément de serrage (23) est réalisé sous la forme d'un corps de coiffe présentant un tenon d'emmanchement central en forme de pot (26) et une bague annulaire (28) façonnée faisant saillie radialement, dans lequel au moins un tenon de positionnement (24) dépasse à angle droit depuis une face frontale de la bague annulaire (28) et au moins un guide (22) réalisé sous la forme d'un corps de manchon en entonnoir dépasse de la face frontale opposée de la bague annulaire (28), dans lequel le tenon d'emmanchement central (26) et ledit au moins un tenon de positionnement (24) s'étendent dans la même direction.

4. Module de pré-assemblage selon l'une des revendications 1 à 3, **caractérisé en ce que** la broche de contact à ressort (11) est réalisée sous la forme d'un ressort de compression hélicoïdal et consiste au moins principalement en un enroulement à ressort s'étendant sur toute sa longueur structurelle, dont les parties d'enroulement (11b) situées dans les zones d'extrémité sont rigidifiées par inhibition de la mobilité axiale de leurs enroulements à ressort.

5. Module de pré-assemblage selon la revendication 4, **caractérisé en ce que** les deux zones d'extrémité de la broche de contact à ressort (11) sont respectivement constituées d'une partie d'enroulement biseautée (11b), dans lequel les parties d'enroulement (11b) opposées sont symétriques dans un miroir par rapport à l'axe transversal central de la broche de contact à ressort (11), dans lequel les zones de transition de la broche de contact à ressort (11), depuis sa partie d'enroulement centrale (11a) jusqu'aux parties d'enroulement (11b) formant des régions d'extrémité biseautées, sont enroulées de manière conique dans le guide (21) associé de l'élément de support (20) et/ou sur un siège conique dans le guide (22) associé de l'élément de serrage (23) avec adaptation à un siège conique.

6. Module de pré-assemblage selon la revendication 4 ou 5, **caractérisé en ce que** les parties d'enroulement (11b) de la broche de contact à ressort (11) formant des zones d'extrémité sont rigidifiées par des enroulements à ressort enroulés sur un bloc, dans lequel les enroulements à ressort sont également enroulés sur un bloc dans les zones de transition coniques de la broche de contact à ressort (11).
